(19) Europäisches Patentamt / European Patent Office / Office européen des brevets

(11) **EP 2 754 996 B1**

(12) **EUROPÄISCHE PATENTSCHRIFT**

(45) Veröffentlichungstag und Bekanntmachung des Hinweises auf die Patenterteilung:
**21.09.2016  Patentblatt 2016/38**

(51) Int Cl.:
*G01D 5/14* *(2006.01)*     *G01B 7/14* *(2006.01)*

(21) Anmeldenummer: **14000106.6**

(22) Anmeldetag: **13.01.2014**

(54) **Messsystem**

Measuring system

Système de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.01.2013   DE 102013000430**

(43) Veröffentlichungstag der Anmeldung:
**16.07.2014   Patentblatt 2014/29**

(73) Patentinhaber: **Micronas GmbH**
**79108 Freiburg (DE)**

(72) Erfinder:
• **Ritter, Joachim**
**79540 Lörrach (DE)**
• **Jörg, Franke**
**79117 Freiburg (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**EP-A1- 2 354 769      EP-A2- 2 339 299**
**WO-A1-2012/060216    JP-A- 2003 194 901**
**US-A1- 2008 044 119   US-A1- 2012 262 157**

**Beschreibung**

Die vorliegende Erfindung betrifft ein Messsystem.

Aus der EP 2 354 769 A1 sind ein Winkelgeber und ein Verfahren zur Bestimmung eines Winkels zwischen einer Sensoranordnung und einem Magnetfeld bekannt. Der Winkelgeber weist einen das Magnetfeld erzeugenden, bezüglich einer Drehachse in unterschiedliche Drehlagen relativ zu der Sensoranordnung verstellbaren Magneten auf. Die Sensoranordnung weist einen ersten Magnetfeldsensor zur Erfassung einer quer zur Drehachse orientierten ersten Magnetfeldkomponente und einen zweiten Magnetfeldsensor zur Erfassung einer zweiten Magnetfeldkomponente auf, die quer zu einer von der Drehachse und der ersten Magnetfeldkomponente aufgespannten Ebene angeordnet ist. Die Sensoranordnung weist einen dritten Magnetfeldsensor zur Erfassung einer in Richtung der Drehachse orientierten dritten Magnetfeldkomponente auf. Ferner sind aus der US 2008 / 044119 A1, der JP 2003 194901 A, der US 2012 / 262157 A1, der EP 2 339 299 A2 und der WO 2012 / 060216 A1 weitere Magnetsensoranordnungen bekannt. Insbesondere weist die US 2008 / 044119 A1 eine Magnetanordnung zur Erzeugung von zwei Periodizitäten auf.

Aus der DE 10 2008 059 401 A1 ist ein Halbleiterchip und ein Verfahren zum Erzeugen von Impulsflanken bekannt, die der Bewegung eines mechanischen Teils synchron zugeordnet sind. Ein Magnetfeld wird erzeugt und mindestens zwei Messsignale werden für das Magnetfeld erfasst. Das Magnetfeld wird derart in Abhängigkeit von der Bewegung des mechanischen Teils verändert, dass die Messsignale zueinander phasenverschoben moduliert werden. Ein erstes Messsignal wird mit einem ersten Referenzwert verglichen. Ein zweites Messsignal wird mit einem zweiten Referenzwert verglichen. Der Betrag des ersten Messsignals wird mit dem Betrag des zweiten Messsignals verglichen. Eine Impulsflanke wird erzeugt, wenn mindestens einer dieser Vergleiche eine Übereinstimmung ergibt oder das Ergebnis des betreffenden Vergleichs sein Vorzeichen ändert.

Aus der EP 1 111 392 A1 ist ein Erfassen der Drehzahl und Winkelstellung eines rotierenden Rades mit anpassbarer Schaltschwelle zur Driftkompensation bekannt. Das Erfassen der Drehzahl und der Winkelstellung eines Rades erfolgt mittels eines berührungslos das Rad abtastenden Sensors, der eine Impulsfolge erzeugt. Die Amplitude der Impulse wird in einem Vergleicher mit einer variablen Schaltschwelle verglichen. Die Schaltschwelle wird so angepasst, dass der Betrag der Differenz zwischen den Amplituden der Impulse und der Schaltschwelle einen vorgebbaren Höchstwert nicht überschreitet.

Aus ELEKTRONIK PRAXIS, Nr. 18, 17. Sept. 2008, Seite 22, J. Quasdorf ist ein optisches Nonius-System bekannt. Die Interpolation analoger Sinussignale ist eine Auswertefunktion bei Positionssensoren. Mit einem speziellen Verfahren ist es möglich, mehrere Messskalen auszuwerten und zu einem Positionswert zu kombinieren. Damit sind Messsysteme möglich, die eine hohe integrale Genauigkeit oder sehr hohe Auflösungen mit guter differenzieller Genauigkeit bieten. Für die Abtastung genügt ein kleiner optischer Sensor.

Aus der EP 1 503 182 B1 ist ein Drehwinkelsensor bekannt. Der Drehwinkelsensor weist eine drehbare Welle, einen mit der drehbaren Welle gekoppelten Magneten und ein magnetempfindliches Sensorelement auf. Das Sensorelement erzeugt in Abhängigkeit vom relativen Drehwinkel zwischen dem Magneten und dem Sensor ein sinusförmiges und ein kosinusförmiges Ausgangssignal. Der Drehwinkelsensor weist eine Auswerteeinheit auf, die aus den Ausgangssignalen ein dem Drehwinkel entsprechendes Signal erzeugt. Die Welle ist längs einer Führungsbahn bei ihrer Drehung um ihre Achse zusätzlich linear parallel zu ihrer Achse verschieblich geführt, so dass sich der Abstand zwischen Magnet und Sensor entsprechend einer Steigung der Führungsbahn verändert. Die Auswerteeinheit ermittelt aus Ausgangssignalen des Sensorelementes ein Signal, aus welchem der Abstand zwischen dem Sensorelement und dem Magneten und damit die Anzahl der vollen Umdrehungen der Welle ermittelbar ist. Aus den sinusförmigen und kosinusförmigen Ausgangssignalen wird ein Feinsignal innerhalb einer vollen Umdrehung ermittelt und dieses Feinsignal wird zu dem Wert der vollen Umdrehung multipliziert mit 360° hinzuaddiert.

Vor diesem Hintergrund ist es die Aufgabe der vorliegenden Erfindung ein Messsystem anzugeben, das den Stand der Technik weiterbildet.

Diese Aufgabe wird durch ein Messsystem mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Messsystem mit einer Magnetfeldsensoranordriung und einem Geber und einer Auswertungsschaltung vorgesehen.

Die Magnetfeldsensoranordnung weist einen in einem Halbeiterchip integrierten ersten Magnetfeldsensor zur Messung einer ersten Komponente eines Magnetfeldvektors in einer ersten Raumrichtung und einen im Halbeiterchip integrierten zweiten Magnetfeldsensor zur Messung einer zweiten Komponente des Magnetfeldvektors in einer zweiten Raumrichtung und einen im Halbeiterchip integrierten dritten Magnetfeldsensor zur Messung einer dritten Komponente des Magnetfeldvektors in einer dritten Raumrichtung auf. Die erste Raumrichtung und die zweite Raumrichtung und die dritte Raumrichtung sind senkrecht zueinander.

Der Geber ist ausgebildet, in Abhängigkeit von seiner rotatorischen und/oder translatorischen Bewegung relativ zur Magnetfeldsensoranordnung den Magnetfeldvektor in der ersten Raumrichtung und in der zweiten Raumrichtung und in der dritten Raumrichtung zu ändern.

Die durch die Bewegung des Gebers bewirkte Änderung des Magnetfeldvektors weist in der ersten Raumrichtung und in der zweiten Raumrichtung eine erste Periodizität auf.

Die durch die Bewegung des Gebers bewirkte Änderung des Magnetfeldvektors weist in der dritten Raumrichtung eine zweite Periodizität auf.

Eine erste Periode der ersten Periodizität und eine zweite Periode der zweiten Periodizität sind unterschiedlich.

An die Auswertungsschaltung sind der erste Magnetfeldsensor und der zweite Magnetfeldsensor und der dritte Magnetfeldsensor angeschlossen.

Die Auswertungsschaltung ist eingerichtet, die Position des Gebers basierend auf einem ersten Messsignal des ersten Magnetfeldsensors und einem zweiten Messsignal des zweiten Magnetfeldsensors und einem dritten Messsignal des dritten Magnetfeldsensors zu bestimmen.

Durch konkrete Umsetzungen gemäß den Ausführungsbeispielen der Figuren wird entsprechend des zuvor erläuterten Erfindungsgedankens eine Vielzahl von Vorteilen erzielt. Obwohl lediglich eine einzige integrierte Magnetfeldsensoranordnung verwendet wird, können unterschiedliche Anforderungen erfüllt werden, die üblicherweise nur mit einer Mehrzahl getrennter Sensoren erreichbar sind. So wird sowohl eine hochauflösende Messung mit beispielsweise einer Vielzahl von Pohlpaaren als auch eine Bestimmung der Absolutposition über die Vielzahl von Pohlpaaren hinweg erreicht, indem die Modulation der dritten Komponente des Magnetfeldvektors in der dritten Raumrichtung zusätzlich ausgewertet werden kann. Entsprechend können einfache Geber realisiert werden, die die Komponente in der dritten Raumrichtung modulieren.

Gemäß einer vorteilhaften Ausgestaltung ist die zweite Periodizität größer als die erste Periodizität. Wird beispielsweise ein Magnetrad verwendet, entspricht die Periode der zweiten Periodizität beispielsweise einer Umdrehung des Magnetrades. Ist der Geber hingegen stabförmig, kann eine Linearbewegung entlang einer Bahn bestimmt werden, wobei eine Periode der zweiten Periodizität einer Wegstrecke zwischen Endpunkten der Bahn entspricht.

In einer Weiterbildung ist vorgesehen, dass zur Erzeugung des Magnetfeldvektors der Geber eine Anzahl von Magneten und/oder eine Anzahl von Spulen aufweist.

In einer anderen auch kombinierbaren Weiterbildung weist die Magnetfeldsensoranordnung zur Erzeugung des Magnetfeldvektors eine Anzahl von Magneten und/oder eine Anzahl von Spulen auf.

Gemäß einer vorteilhaften Weiterbildung weist der rotatorisch bewegliche Geber eine Mehrzahl von ersten Magneten und eine Anzahl von zweiten Magneten auf. Die Mehrzahl von ersten Magneten erzeugt mit jeder Umdrehung des Gebers mittels einer Mehrzahl von Pohlpaaren die drehwinkelabhängige erste Magnetfeldänderung mit der ersten Periodizität in der Magnetfeldsensoranordnung in der ersten Raumrichtung und zweiten Raumrichtung. Die Anzahl von zweiten Magneten erzeugt mit jeder Umdrehung des Gebers die drehwinkelabhängige zweite Magnetfeldänderung mit der zweiten Periodizität in der Magnetfeldsensoranordnung in der dritten Raumrichtung.

In einer anderen Weiterbildung ist vorgesehen, dass der entlang einer Bahn bewegliche Geber eine Mehrzahl von ersten Magneten und eine Anzahl von zweiten Magneten aufweist. Die Bahn erstreckt sich beispielweise entlang einer Geraden. Auch ist es möglich, dass die Bahn eine oder mehrere Krümmungen aufweist.

Die Mehrzahl von ersten Magneten erzeugt mit einer Bewegung des Gebers entlang der Bahn mittels einer Mehrzahl von Pohlpaaren die wegabhängige erste Magnetfeldänderung mit der ersten Periodizität in der Magnetfeldsensoranordnung in der ersten Raumrichtung und in der zweiten Raumrichtung.

Die Anzahl von zweiten Magneten erzeugt mit der Bewegung des Gebers entlang der Bahn die wegabhängige zweite Magnetfeldänderung mit der zweiten Periodizität in der Magnetfeldsensoranordnung in der dritten Raumrichtung.

Gemäß einer anderen Weiterbildung weist der rotatorisch bewegliche Geber eine Mehrzahl von Zähnen auf. Ein Material der Zähne beeinflusst ein Magnetfeld eines Magneten der Magnetfeldsensoranordnung. Die Zähne des Gebers sind ausgebildet, mit jeder Umdrehung des Gebers die drehwinkelabhängige erste Magnetfeldänderung des Magnetfeldvektors in der Magnetfeldsensoranordnung mit der ersten Periodizität in der ersten Raumrichtung und zweiten Raumrichtung zu erzeugen. Der Geber ist ausgebildet, mit jeder Umdrehung die drehwinkelabhängige zweite Magnetfeldänderung mit der zweiten Periodizität in der Magnetfeldsensoranordnung in der dritten Raumrichtung zu erzeugen.

In einer anderen Weiterbildung weist der entlang einer Bahn bewegliche Geber eine Mehrzahl von Zähnen auf. Ein Material der Zähne beeinflusst ein Magnetfeld eines Magneten der Magnetfeldsensoranordnung. Die Zähne des Gebers sind ausgebildet, bei einer Bewegung des Gebers entlang der Bahn die wegabhängige erste Magnetfeldänderung mit der ersten Periodizität in der Magnetfeldsensoranordnung in der ersten Raumrichtung und der zweiten Raumrichtung zu erzeugen. Der Geber ist ausgebildet, entlang der Bahn die wegabhängige zweite Magnetfeldänderung mit der zweiten Periodizität in der Magnetfeldsensoranordnung in der dritten Raumrichtung zu erzeugen.

Gemäß einer vorteilhaften Weiterbildung ist die Auswertungsschaltung eingerichtet zur Erzeugung des ersten Signals mit der ersten Periodizität aus dem ersten Messsignal und dem zweiten Messsignal entsprechend einer ersten Funktion. Die erste Funktion ist vorteilhafterweise eine Arcustangens-Funktion:

$$D = \arctan (A/B) \qquad\qquad (1)$$

Dabei ist D das erste Signal, A ist das erste Messsignal und B ist das zweite Messsignal.

Die Auswertungsschaltung ist vorzugsweise eingerichtet, ein zweites Signal mit der zweiten Periodizität aus dem dritten Messsignal des dritten Magnetfeldsensors entsprechend einer zweiten Funktion zu erzeugen.

Die zweite Funktion lautet zum Beispiel:

$$E = \sqrt{(A^2 + B^2 + C^2)} \qquad\qquad (2)$$

Dabei ist E das zweite Signal, A ist das erste Messsignal und B ist das zweite Messsignal und C ist das dritte Messsignal. Die zuvor genannte zweite Funktion kann dann besonders vorteilhaft verwendet werden, wenn eine Amplitudenmodulation in zumindest der dritten Raumrichtung erfolgt.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert. Funktionsgleiche Elemente sind durch dieselben Bezugszeichen bezeichnet.

Dabei zeigen

Fig. 1 eine schematische Darstellung eines Ausführungsbeispiels eines Messsystems,

Fig. 2 ein schematisches Diagramm eines Ausführungsbeispiels,

Fig. 3 einen Blockschaltplan eines Ausführungsbeispiels einer Auswertungsschaltung,

Fig. 4 einen Blockschaltplan eines weiteren Ausführungsbeispiels einer Auswertungsschaltung,

Fig.5 einen Blockschaltplan eines weiteren Ausführungsbeispiels einer Auswertungsschaltung,

Fig. 6 eine schematische Darstellung eines Ausführungsbeispiels eines Gebers,

Fig. 7 ein schematisches Diagramm eines weiteren Ausführungsbeispiels,

Fig. 8a eine schematische Darstellung eines weiteren Ausführungsbeispiels eines Gebers,

Fig. 8b eine schematische Darstellung eines weiteren Ausführungsbeispiels eines Gebers,

Fig. 8c ein schematisches Diagramm eines weiteren Ausführungsbeispiels,

Figuren 9a und 9b schematische Darstellungen eines weiteren Ausführungsbeispiels eines Gebers,

Fig. 9c ein schematisches Diagramm zu den Ausführungsbeispielen der Figuren 9a und 9b,

Fig. 10a eine schematische Darstellung eines weiteren Ausführungsbeispiels eines Gebers, und

Fig. 10b ein schematisches Diagramm eines weiteren Ausführungsbeispiels.

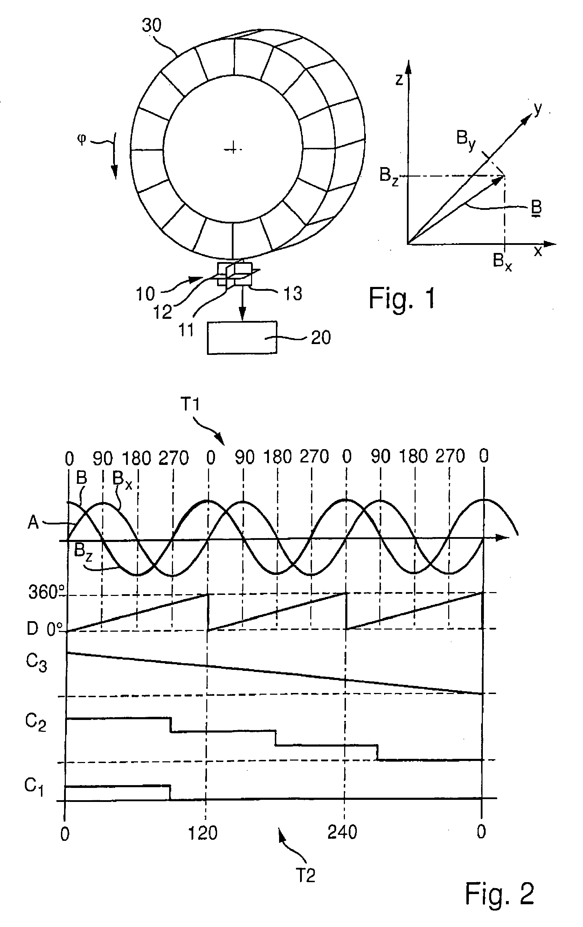

In Fig. 1 ist ein Messsystem schematisch dargestellt. Das Messsystem weist eine Magnetfeldsensoranordnung 10 eine Auswertungsschaltung 20 und einen Geber 30 auf. Der Geber 30 ist relativ zur Magnetfeldsensoranordnung 10 rotatorisch und/oder translatorisch beweglich. Mittels des Messsystems soll die Position und/oder Bewegung des Gebers 30 erfasst werden. Grundsätzlich kann als Geber 30 ein Magnetrad oder eine Magnetstange mit mehreren Polpaaren verwendet werden. Das Magnetrad erlaubt die Winkelmessung einer Drehung. Die Magnetstange erlaubt eine Wegmessung. die Magnetstange muss nicht notwendigerweise gerade sein, eine den Anforderungen entsprechend gekrümmte Magnetstange erlaubt auch nicht geradlinige Wegmessungen.

Die Magnetfeldsensoranordnung 10 weist einen ersten Magnetfeldsensor 11 und einen zweiten Magnetfeldsensor 12 und einen dritten Magnetfeldsensor 13 auf, die in genau einem Halbeiterchip integriert sind. Die Magnetfeldsensoren 11, 12, 13 sind zur Messung von Komponenten $B_x$, $B_z$, $B_y$ eines Magnetfeldvektors B angeordnet. In Fig. 1 ist ein Koordinatensystem mit den Raumrichtungen x, y und z schematisch dargestellt. Der Ursprung des Koordinatensystems ist in der Mitte der Magnetfeldsensoranordnung 10, jedoch für eine bessere Sichtbarkeit in Fig. 1 versetzt dargestellt.

Der erste Magnetfeldsensor 11 ist zur Messung einer ersten Komponente $B_x$ des Magnetfeldvektors B in einer ersten Raumrichtung x angeordnet. Der zweite Magnetfeldsensor 12 ist zur Messung einer zweiten Komponente $B_z$ des Magnetfeldvektors B in einer zweiten Raumrichtung z angeordnet. Der dritte Magnetfeldsensor 13 ist zur Messung einer dritten Komponente $B_y$ des Magnetfeldvektors B in einer dritten Raumrichtung angeordnet. Die Magnetfeldsensoren 11, 12, 13 sind beispielsweise Hallplatten, die zueinander rechtwinklig im Halbleiterchip integriert sind.

Der Geber 30 im Ausführungsbeispiel der Fig. 1 ist ausgebildet in Abhängigkeit von seiner rotatorischen Bewegung den Magnetfeldvektor B in allen drei Raumrichtungen x, y, z zu ändern.

In Fig. 2 ist in einem Diagramm schematisch dargestellt, dass die Bewegung des Gebers 30 eine Änderung des Magnetfeldvektors B in der ersten Raumrichtung x - dargestellt durch die erste Magnetfeldkomponente $B_x$ - und in der zweiten Raumrichtung z - dargestellt durch die zweite Magnetfeldkomponente $B_z$ - mit einer ersten Periodizität $T_1$. bewirkt.

Ebenfalls ist in Fig. 2 dargestellt, dass die Bewegung des Gebers 30 eine Änderung des Magnetfeldvektors B in der dritten Raumrichtung y - dargestellt durch die Messsignale C1, C2, C3 - mit einer zweiten Periodizität $T_2$ bewirkt. Eine erste Periode der ersten Periodizität $T_1$ und eine zweite Periode der zweiten Periodizität $T_2$ sind unterschiedlich. Im Ausführungsbeispiel der Fig. 2 ist die zweite Periode dreimal so lang wie die erste Periode. Bezogen auf das Ausführungsbeispiel der Fig. 1 ist die zweite Periode der zweiten Periodizität $T_2$ beispielsweise gleich einer Umdrehung des Gebers 30. Hingegen ermöglicht die kleinere erste Periode der ersten Periodizität $T_1$ eine besonders hohe Auflösung des Drehwinkels $\varphi$.

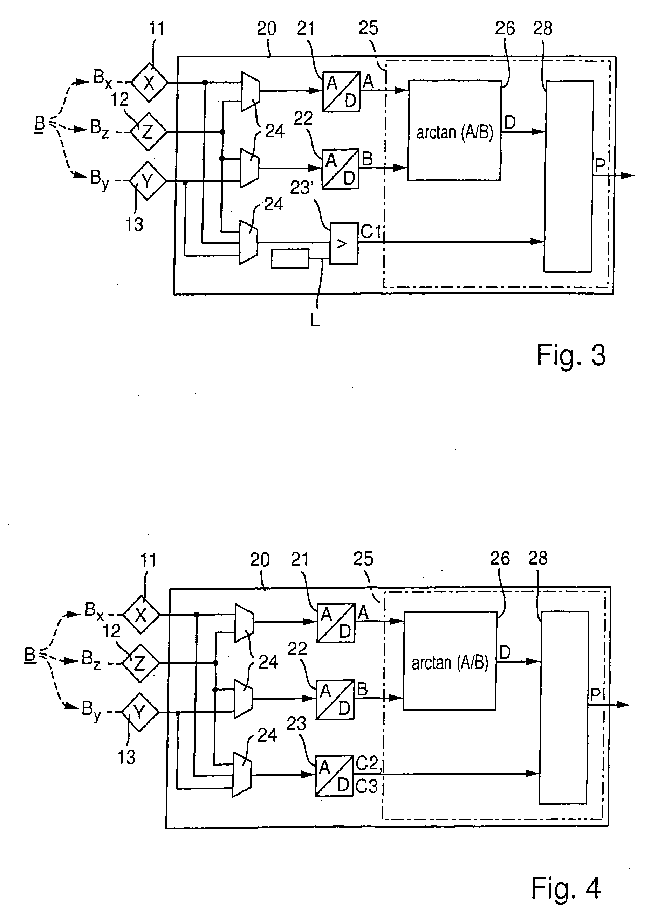

Ausführungsbeispiele für die Auswertungsschaltung 20 sind in den Figuren 3, 4 und 5 als Blockschaltplan schematisch dargestellt. In den Ausführungsbeispielen der Figuren 3, 4 und 5 sind an die Auswertungsschaltung 20 der erste Magnetfeldsensor 11 und der zweite Magnetfeldsensor 12 und der dritte Magnetfeldsensor 13 angeschlossen.

Die Auswertungsschaltung 20 des Ausführungsbeispiels der Fig. 3 weist eine Anzahl von Analog-Digital-Umsetzer 21, 22, 23' auf. Ein Analogeingang eines Analog-Digital-Umsetzers 21, 22, 23' ist jeweils mittels eines Multiplexers 24 mit einem der angeschlossenen Magnetfeldsensoren 11, 12, 13 verbindbar. Im Folgenden wird die Schalterstellung der Multiplexer 24 für den Fall angenommen, dass der erste Magnetfeldsensor 11 mit dem ersten Analog-Digital-Umsetzer 21, der zweite Magnetfeldsensor 12 mit dem zweiten Analog-Digital-Umsetzer 22 und der dritte Magnetfeldsensor 13 mit dem dritten Analog-Digital-Umsetzer 23' verbunden ist. Je nach Orientierung der Magnetfeldsensoranordnung 10 im Raum kann auch eine andere Verbindung durch die Multiplexer 24 geschaltet sein, so dass eine hohe Flexibilität der räumlichen Anordnung der Magnetfeldsensoranordnung 10 gegeben ist.

Alternativ zum Ausführungsbeispiel der Fig. 3 kann für jeden Magnetfeldsensor 11, 12, 13 ein Analog-Digital-Umsetzer vorgesehen sein. In diesem Fall würden auf der digitalen Seite die Signale ausgewählt werden und die Multiplexer 24 könnten entfallen. Alternativ könnte auch ein einziger schneller Analog-Digital-Umsetzer verwendet werden, und die Analogsignale der Magnetfeldsensoren 11, 12, 13 werden in schneller Folge zyklisch auf den Eingang des einzigen Analog-Digital-Umsetzers mittels eines Multiplexers geschaltet.

Im Ausführungsbeispiel der Fig. 3 gibt der erste Analog-Digital-Umsetzer 21 das digitale Messsignal A, der zweite Analog-Digital-Umsetzer 22 das digitale Messsignal B und der dritte Analog-Digital-Umsetzer 23' das digitale Messsignal C1 aus. Der dritte Analog-Digital-Umsetzer 23' ist dabei als Komparator ausgebildet und gibt als Messsignal C1 lediglich ein Bit aus. Der dritte Analog-Digital-Umsetzer 23' ist somit durch genau einen Schwellwertschalter gebildet.

Die Auswertungsschaltung 20 der Fig. 3 ist eingerichtet, die Position des Gebers 30 basierend auf dem ersten Messsignal A des ersten Magnetfeldsensors 11 und dem zweiten Messsignal B des zweiten Magnetfeldsensors 12 und dem dritten Messsignal C1 des dritten Magnetfeldsensors 13 zu bestimmen und als Positionssignal P auszugeben. Beispielsweise enthält das Positionssignal P für jedes Grad des Winkels $\varphi$ gemäß Fig. 1 einen Wert. Zur Ermittlung der Position weist die Auswertungsschaltung 20 eine Logik 25 auf. In den Figuren 3, 4 und 5 sind Funktionen der Logik 25 als Funktionsblöcke 26, 27, 28 schematisch dargestellt. Die Logik 25 kann durch eine festverdrahtete Hardware oder durch einen programmierbaren Prozessor und der Funktion entsprechende Software realisiert sein.

Das erste Messsignal A und das zweite Messsignal B stellen beispielsweise die Grundfrequenz - also eine magnetische Umdrehung oder ein Polpaar - dar. Das dritte Messsignal C1 erlaubt das unterscheiden mehrerer Umdrehungen oder Polpaare innerhalb einer mechanischen Umdrehung. Der Funktionsblock 26 beschreibt eine Arkustangensfunktion der Messsignale A und B:

$$D = \text{arctan}\ (A/B) \qquad\qquad\qquad (3)$$

Das erste Signal D ermöglicht daher innerhalb eines Polpaares des Gebers 30 eine besonders feine Auslösung der Position. Die Logik 25 ist mittels des Funktionsblocks 28 eingerichtet, aus dem ersten Signal D und dem dritten Messsignal C1 das Positionssignal P zu bilden. Der Funktionsblock 28 ist beispielsweise eine Zähllogik, ein Algorithmus und/oder eine Tabelle (LUT - engl. Look Up Table).

Der Verlauf des dritten Messsignals C1 ist schematisch in Fig. 2 dargestellt,. Demzufolge übersteigt das analoge Ausgangssignal des dritten Magnetfeldsensors 13 innerhalb der ersten Periode des ersten/zweiten Messsignals A, B die Schwelle L. Ausgehend von dieser Initialisierung können die weiteren Perioden des ersten/zweiten Messsignals A, B gezählt und das Positionssignal P aus dem Zählwert der Zählung und dem ersten Signal D bestimmt werden. Die Schwelle L ist vorteilhafterweise einstellbar, insbesondere programmierbar.

In Fig. 4 ist eine Auswertungsschaltung 20 eines weiteren Ausführungsbeispiels anhand eines Blockschaltplans schematisch dargestellt. Der dritte Analog-Digital-Umsetzer 23 in Fig. 4 ermöglicht ein höher aufgelöstes digitales Messsignal C2, C3. Dabei weist der dritte Analog-Digital-Umsetzer 23 eine kleinere Auflösung auf als der erste Analog-Digital-Umsetzer 21 und der zweite Analog-Digital-Umsetzer 22.

In Fig. 2 sind zwei unterschiedliche dritte Messsignale C2, C3 in dem Diagramm dargestellt. Das Messsignal C2 weist vier Werte einer Treppenfunktion auf, durch die drei Perioden des ersten/zweiten Messsignals A, B sicher unterschieden werden können. Durch die Treppenfunktion werden eine hohe Störsicherheit und ein hoher Signalabstand erzielt. Die Drift über die Temperatur und Alterung von Magneten des Gebers bzgl. der Komponenten $B_x$, $B_z$ des Magnetfeldvektors $\underline{B}$ müssen nicht kompensiert werden. Eine Kompensation für die Komponente $B_y$ kann vorgesehen sein. Das Messsignal C3 weist eine höhere Auflösung auf, so dass eine überwiegend linear fallende Funktion ausgewertet werden kann. Darüber hinaus sind auch andere Stufungen und Auslösungen durch den dritten Analog-Digital-Umsetzer 23 möglich. Beispielsweise ist das dritte Messsignal ein Sinussignal mit kleinerer Periodizität. Hier ist ebenfalls die Verwendung einer Noniusspur möglich.

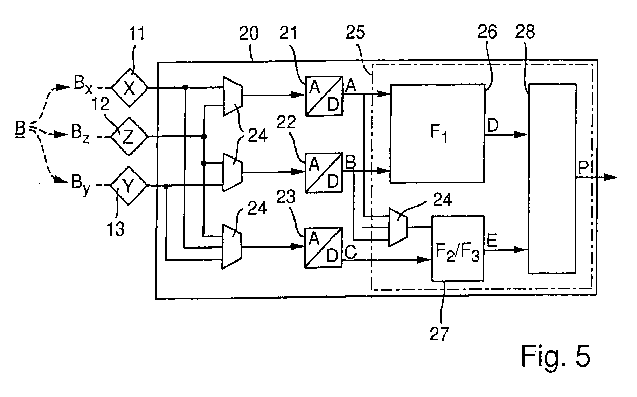

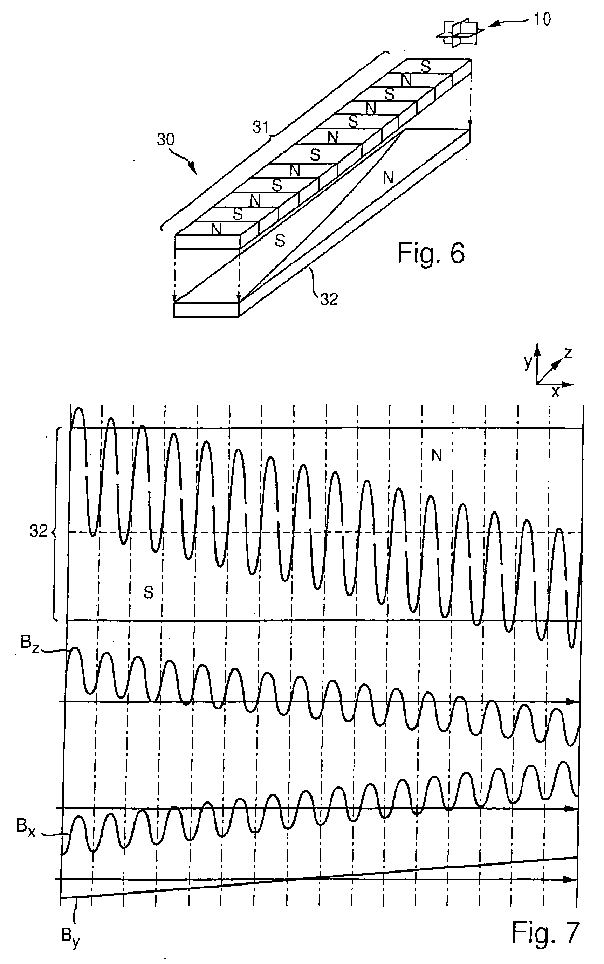

Ein weiteres Ausführungsbeispiel einer Auswertungsschaltung 20 ist in Fig. 5 als Blockschaltplan dargestellt. Ein zusätzlicher Funktionsblock 27 ermöglicht es, zusätzlich zur ersten Funktion F1 eine zweite Funktion F2 und ggf. eine dritte Funktion F3 zu verwenden. Der Funktionsblock 27 gibt die Auswertungsergebnisse als Signal E aus, das zusammen mit dem Signal D durch den Funktionsblock 28 ausgewertet und das Positionssignal P ausgegeben wird. Durch den Multiplexer 24 ist eingangsseitig am Funktionsblock 27 das erste Messsignal A und/oder das zweite Messsignal B wahlweise anlegbar. Das Ausführungsbeispiel der Fig. 5 ermöglicht daher auch eine Auswertung komplexerer Änderungen des Magnetfeldvektors $\underline{B}$, wie in den Ausführungsbeispielen der Figuren 6 bis 10b beschrieben.

In einem Ausführungsbeispiel ist beispielsweise die erste Funktion F1:

$$F1(B_x, B_z) = \arctan (B/A) \tag{4}$$

Die zweite Funktion F2 ist beispielsweise:

$$F2(B_y, B_z) = \arctan (B/C) \tag{5}$$

In diesem Ausführungsbeispiel wird der Vorteil verbesserter Störsicherheit und verbessertem Signalabstand erzielt. Temperaturgang und Alterung von $B_x$, $B_y$, $B_z$ müssen nicht zwingend kompensiert werden.

In einem anderen Ausführungsbeispiel ist beispielsweise die erste Funktion F1:

$$F1(B_x, B_z) = \arctan (B/A) \tag{6}$$

Die zweite Funktion F2 ist beispielsweise:

$$F2(B_x, B_y, B_z) = \sqrt{(A^2 + B^2 + C^2)} \tag{7}$$

Demzufolge wird in diesem Ausführungsbeispiel mit jeder Messung ein Winkelwert und ein Betragswert bestimmt.

In einem Ausführungsbeispiel mit der Auswertung mittels dreier Funktionen F1, F2 und F3 gilt für F1:

$$F1(B_x, B_z) = \arctan (B/A) \tag{8}$$

Die zweite Funktion F2 ist beispielsweise:

$$F2(B_y, B_z) = \arctan (B/C) \qquad (9)$$

Zudem ist die dritte Funktion F3 beispielsweise:

$$F2(B_x, B_y, B_z) = \sqrt{(A^2 + B^2 + C^2)} \qquad (10)$$

In einem anderen Ausführungsbeispiel werden die Messsignale A, B, C mittels anderer Funktionen F1, F2, F3 ausgewertet:

$$F1(B_x, B_z) = \arctan (B/A) \qquad (11)$$

$$F2(B_x, B_z) = \sqrt{(A^2 + B^2)} \qquad (12)$$

$$F3(B_y) = C \qquad (13)$$

Demzufolge werden ein Winkel, ein Betrag und die Modulation in y-Richtung separat ausgewertet.

Die Figuren 6 und 7 zeigen ein weiteres Ausführungsbeispiel mit einem Geber 30, der eine Anzahl erster Magnete 31 und genau einen zweiten Magneten 32 aufweist. Wie in Fig. 6 dargestellt, werden erste Magnete 31 und der zweite Magnet 32 räumlich nah zueinander angeordnet. Beispielsweise werden die ersten Magnete 31 auf den zweiten Magneten 32 geklebt. Die resultierenden Komponenten $B_x$, $B_y$, $B_z$ des Magnetfeldvektors $\underline{B}$ in Abhängigkeit von einer Bewegung der Magnetfeldsensorsanordnung 10 entlang des Gebers 30 ist in der Fig. 7 schematisch dargestellt.

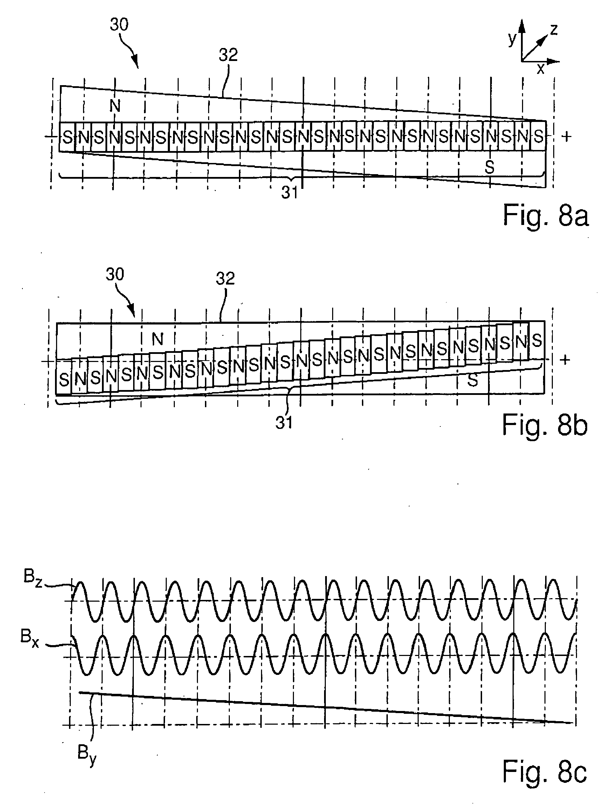

Andere Ausführungsbeispiele von Messsystemen sind in den Figuren 8a und 8b schematisch dargestellt. In beiden Ausführungsbeispielen weist der Geber 30 erste Magneten 31 und genau einen zweiten Magneten 32 auf. Erste und zweite Magneten 31, 32 sind quer zur Bewegungsrichtung (x-Richtung) versetzt angeordnet, um die y-Komponente $B_y$ des Magnetfeldvektors $\underline{B}$ entlang des Bewegungsweges zu modulieren. Die Änderungen der Komponenten $B_x$, $B_y$, $B_z$ des Magnetfeldvektors $\underline{B}$ sind in Fig. 8c schematisch dargestellt.

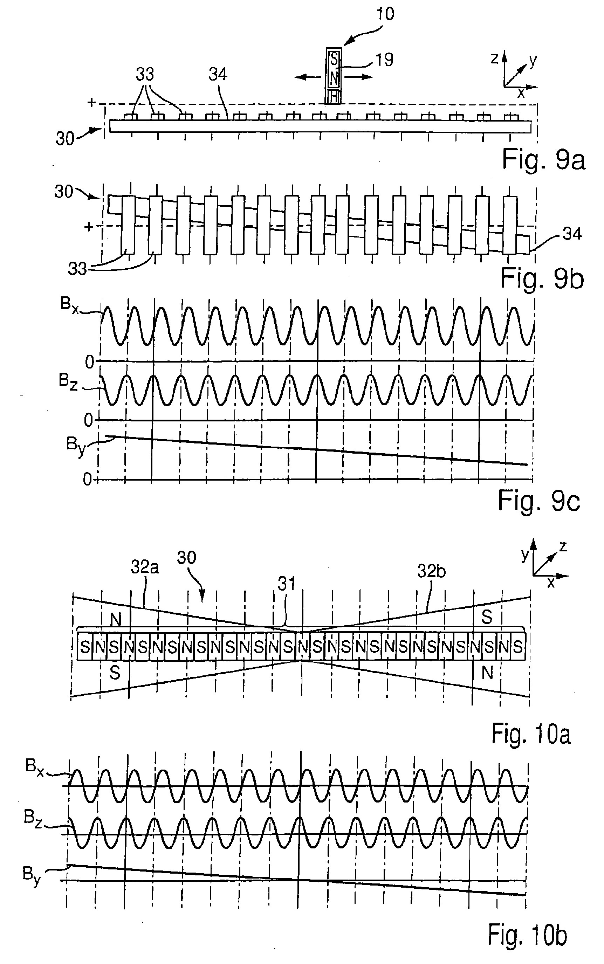

Fig. 9a zeigt ein weiteres Ausführungsbeispiel eines Messsystems. Die Modulation des Magnetfeldvektors $\underline{B}$ in der dritten Raumrichtung z kann auch mittels eines Back-Bias-Magneten 19, welcher hinter den Magnetfeldsensoren 11, 12, 13 platziert ist, erfolgen. Hierzu weist der Geber 30 ein geeignet geformtes Metallrad oder geformte Metallstange auf. Dabei kann der Geber 30 oder die Magnetfeldsensoranordnung 10 oder beide bewegt werden. Im Ausführungsbeispiel der Fig. 9a weist der Geber 30 Zähne 33 auf. Die Zähne 33 weisen ein Material auf, das ein Magnetfeld des Back-Bias-Magneten 19 beeinflusst. Der Back-Bias-Magnet 19 bewegt sich zusammen mit den Magnetfeldsensoren 11, 12, 13 relativ zur Struktur des Gebers 30. Die Struktur kann das Magnetfeld verbiegen, indem die Struktur z.B. Eisen aufweist. Hierdurch können wegabhängige Messsignale in der Magnetfeldsensoranordnung 10 erzeugt werden. Allerdings gibt es in diesem Fall keinen Nulldurchgang der Komponenten $B_x$, $B_y$, $B_z$ des Magnetfeldvektors $\underline{B}$, wie in Fig. 9c schematisch dargestellt ist.

Die Zähne 33 des Gebers 30 in den Figuren 9a und 9b sind ausgebildet, bei einer Bewegung des Gebers 30 entlang einer Bahn relativ zur Magnetfeldsensoranordnung 10 die wegabhängige erste Magnetfeldänderung mit einer ersten Periodizität in der Magnetfeldsensoranordnung 10 in der ersten Raumrichtung x und der zweiten Raumrichtung z zu erzeugen. Diese Relativbewegung vom Geber 30 zur Magnetfeldsensoranordnung 10 ermöglicht es, beispielsweise den Geber 30 gehäusefest zu positionieren und den Magnetfeldsensoranordnung 10 zum Gehäuse verschieblich zu lagern. Durch die wegabhängige erste Magnetfeldänderung mit der ersten Periodizität wird eine hohe Auflösung erzielt. So können selbst kleine Bewegungen entlang der Bahn ermittelt werden.

Zudem ist der Geber 30 ausgebildet, entlang der Bahn die wegabhängige zweite Magnetfeldänderung mit einer zweiten Periodizität in der Magnetfeldsensoranordnung 10 in der dritten Raumrichtung y zu erzeugen. In Fig. 9b ist hierzu dargestellt, dass ein Metallelement 34 - z.B. aus Eisen - unterhalb der Zähne 33 angeordnet ist und das Magnetfeld des Back-Bias-Magneten 19 in y-Richtung verschiebt. Das Metallelement 34 kann daher auch als Verschiebelement oder Verlagerungselement bezeichnet werden. Die Form des Verschiebelements 34 ändert sich dabei in y-Richtung in Abhängigkeit von der Bewegungsrichtung, im Ausführungsbeispiel der Fig. 9b der x-Richtung. Alternativ zum Ausführungsbeispiel der Figuren 9a und 9b kann der Back-Bias-Magneten 19 eine andere Orientierung aufweisen.

Ein weiteres Ausführungsbeispiel eines Messsystems ist In den Figuren 10a und 10b schematisch dargestellt. Der Geber 30 weist eine Anzahl erster Magneten 31 und eine Anzahl zweiter Magneten 32a und 32b auf. Die ersten Magneten 31 erzeugen in der x-z-Ebene in einem geeigneten Abstand in der Bewegung ein sinusförmiges Magnetfeld. Zwei um 90° versetzten Magnetfeldsensoren ermöglichen die Erfassung der x-Komponente $B_x$ und der z-Komponenten $B_z$ des Feldes. Aus den zugehörigen Messsignalen wird der Winkel gemäß der ArkustangensFunktion berechnet.

Eine Modulation des Magnetfeldes in y-Richtung wird durch die seitlichen Magnetpole der zweiten Magneten 32a, 32b erzeugt. Damit kann in der y-Richtung eine zusätzliche Feldkomponenten $B_y$ erzeugt werden, welche es erlaubt mehrere Polpaare der ersten Magnete 31 zu unterscheiden. Im Ausführungsbeispiel der Fig. 10b wird ein kontinuierlicher, rampenförmiger Verlauf angedeutet. Ein geeigneter zweiter Magnet könnte auch eine sich treppenförmig ändernde y-Komponente $B_y$ erzeugen. Ebenfalls ist es in einem von den Fig. 10a und 10 abweichenden Ausführungsbeispiel möglich, die zweiten Magneten als Noniusspur auszubilden, z.B.:

$$F1(B_x, B_z) = \sin (10/10) \qquad\qquad (14)$$

$$F2(B_y) = \sin (9/10) \qquad\qquad (15)$$

Die Erfindung ist nicht auf die dargestellten Ausgestaltungsvarianten der Figuren 1 bis 10b beschränkt. Beispielsweise ist es möglich, eine andere Anordnung der Magnete zu verwenden. Auch ist es möglich, dass sowohl der Geber 30 als auch die Magnetfeldsensoranordnung 10 jeweils eine Anzahl Magnete aufweist. Die Funktionalität des Messsystems gemäß Fig. 1 kann besonders vorteilhaft für ein Verstellsystem verwendet werden.

Bezugszeichenliste

| | |
|---|---|
| 10 | Magnetfeldsensoranordnung |
| 11, 12, 13 | Magnetfeldsensor |
| 19, 31, 32, 32a, 32b | Magnet |
| 20 | Auswertungsschaltung |
| 21, 22, 23, 23' | Analog-Digital-Umsetzer |
| 24 | Multiplexer |
| 25 | Logik, Prozessor |
| 26, 27, 28 | Funktionsblock |
| 30 | Geber |
| 33 | Zahn |
| 34 | Verschiebungselement, Verlagerungselement |

| | |
|---|---|
| B | Magnetfeldvektor |
| $B_x, B_x, B_z$ | Komponente des Magnetfeldvektors |
| x, y, z | Raumrichtung |
| $\varphi$ | Drehwinkel |

**Patentansprüche**

1. Messsystem,

- mit einer Magnetfeldsensoranordnung (10), die einen in einem Halbeiterchip integrierten ersten Magnetfeldsensor (11) zur Messung einer ersten Komponente ($B_x$) eines Magnetfeldvektors ($\underline{B}$) in einer ersten Raumrichtung (x) und

- mit einem Geber (30), der ausgebildet ist, in Abhängigkeit von seiner rotatorischen und/oder translatorischen Bewegung den Magnetfeldvektor ($\underline{B}$) in der ersten Raumrichtung (x) und in der zweiten Raumrichtung (z) und in der dritten Raumrichtung (y) zu ändern,

- wobei der bewegliche Geber eine Mehrzahl von ersten Magneten aufweist,

- wobei die Mehrzahl von ersten Magneten mit einer Bewegung oder Drehung des Gebers (30) mittels einer Mehrzahl von Pohlpaaren die wegabhängige oder drehwinkelabhängige Änderung des Magnetfeldvektors ($\underline{B}$) mit einer ersten Periodizität (T1) in dem ersten Magnetfeldsensor (11) in der ersten Raumrichtung (x) erzeugt,
- mit einer Auswertungsschaltung (20), an die der erste Magnetfeldsensor (11) angeschlossen ist,

**dadurch gekennzeichnet, dass**

- der bewegliche Geber (30) eine Anzahl von zweiten Magneten aufweist,
- das Messsystem einen im Halbeiterchip integrierten zweiten Magnetfeldsensor (12) zur Messung einer zweiten Komponente ($B_z$) des Magnetfeldvektors ($\underline{B}$) in einer zweiten Raumrichtung (z) und einen im Halbeiterchip integrierten dritten Magnetfeldsensor (13) zur Messung einer dritten Komponente ($B_y$) des Magnetfeldvektors ($\underline{B}$) in einer dritten Raumrichtung (y) aufweist,
- wobei die Anzahl von zweiten Magneten mit der Bewegung oder Drehung des Gebers (30) die wegabhängige oder drehwinkelabhängige Änderung des Magnetfeldvektors ($\underline{B}$) mit einer zweiten Periodizität (T2) in dem zweiten Magnetfeldsensor (12) in der dritten Raumrichtung (y) erzeugt,
- wobei die Mehrzahl von ersten Magneten mit einer Bewegung oder Drehung des Gebers (30) mittels einer Mehrzahl von Pohlpaaren die wegabhängige oder drehwinkelabhängige Änderung des Magnetfeldvektors ($\underline{B}$) mit der ersten Periodizität (T1) in dem dritten Magnetfeldsensor (13) in der zweiten Raumrichtung (z) erzeugt,
- wobei eine erste Periode der ersten Periodizität (T1) und eine zweite Periode der zweiten Periodizität (T2) unterschiedlich sind,
- wobei der zweite Magnetfeldsensor (12) und der dritte Magnetfeldsensor (13) an die Auswerteschaltung (20) angeschlossen sind, und
- die Auswertungsschaltung (20) eingerichtet ist, die Position des Gebers (30) basierend auf einem ersten Messsignal (A) des ersten Magnetfeldsensors (11) und einem zweiten Messsignal (B) des zweiten Magnetfeldsensors (12) und einem dritten Messsignal (C) des dritten Magnetfeldsensors (13) zu bestimmen.

2. Messsystem nach Anspruch 1,
**dadurch gekennzeichnet, dass**
zur Erzeugung des Magnetfeldvektors ($\underline{B}$) der Geber (30) eine Anzahl von Magneten (31, 32, 32a, 32b) und/oder eine Anzahl von Spulen aufweist.

3. Messsystem nach einem der vorhergehenden Ansprüche,
**dadurch gekennzeichnet, dass**
zur Erzeugung des Magnetfeldvektors ($\underline{B}$) die Magnetfeldsensoranordnung (10) eine Anzahl von Magneten (19) und/oder eine Anzahl von Spulen aufweist.

4. Messsystem nach Anspruch 2,
**dadurch gekennzeichnet, dass**
der rotatorisch bewegliche Geber (30) eine Mehrzahl von ersten Magneten (31) und eine Anzahl von zweiten Magneten aufweist,
wobei die Mehrzahl von ersten Magneten mit jeder Umdrehung des Gebers (30) mittels einer Mehrzahl von Polpaaren die drehwinkelabhängige erste Magnetfeldänderung mit der ersten Periodizität ($T_1$) in der Magnetfeldsensoranordnung (10) in der ersten Raumrichtung (x) und zweiten Raumrichtung (z) erzeugt, und
wobei die Anzahl von zweiten Magneten mit jeder Umdrehung des Gebers (30) die drehwinkelabhängige zweite Magnetfeldänderung mit der zweiten Periodizität ($T_2$) in der Magnetfeldsensoranordnung (10) in der dritten Raumrichtung (y) erzeugt.

5. Messsystem nach Anspruch 2,
**dadurch gekennzeichnet, dass**
der entlang einer Bahn relativ zur Magnetfeldsensoranordnung (10) bewegliche Geber (30) eine Mehrzahl von ersten Magneten (31) und eine Anzahl von zweiten Magneten (32, 32a, 32b) aufweist,
wobei die Mehrzahl von ersten Magneten (31) mit einer Bewegung des Gebers (31) entlang der Bahn mittels einer Mehrzahl von Polpaaren die wegabhängige erste Magnetfeldänderung mit der ersten Periodizität ($T_1$) in der Magnetfeldsensoranordnung (10) in der ersten Raumrichtung (x) und in der zweiten Raumrichtung (z) erzeugt,
wobei die Anzahl von zweiten Magneten (32, 32a, 32b) mit der Bewegung des Gebers (30) entlang der Bahn die wegabhängige zweite Magnetfeldänderung mit der zweiten Periodizität ($T_2$) in der Magnetfeldsensoranordnung (10) in der dritten Raumrichtung (y) erzeugt.

6. Messsystem nach Anspruch 3,

**dadurch gekennzeichnet, dass**
der rotatorisch bewegliche Geber eine Mehrzahl von Zähnen aufweist,
wobei ein Material der Zähne ein Magnetfeld eines Magneten der Magnetfeldsensoranordnung beeinflusst,
wobei die Zähne des Gebers ausgebildet sind, mit jeder Umdrehung des Gebers die drehwinkelabhängige erste Magnetfeldänderung des Magnetfeldvektors in der Magnetfeldsensoranordnung mit der ersten Periodizität in der ersten Raumrichtung und zweiten Raumrichtung zu erzeugen, und
wobei der Geber ausgebildet ist, mit jeder Umdrehung die (drehwinkelabhängige) zweite Magnetfeldänderung mit der zweiten Periodizität in der Magnetfeldsensoranordnung in der dritten Raumrichtung zu erzeugen.

7. Messsystem nach Anspruch 3,
   **dadurch gekennzeichnet, dass**
   der entlang einer Bahn relativ zur Magnetfeldsensoranordnung (10) bewegliche Geber (30) eine Mehrzahl von Zähnen (33) aufweist,
   wobei ein Material der Zähne (33) ein Magnetfeld eines Magneten (19) der Magnetfeldsensoranordnung (10) beeinflusst,
   wobei die Zähne (33) des Gebers (30) ausgebildet sind, bei einer Bewegung des Gebers (30) entlang der Bahn die wegabhängige erste Magnetfeldänderung mit der ersten Periodizität ($T_1$) in der Magnetfeldsensoranordnung (10) in der ersten Raumrichtung (x) und der zweiten Raumrichtung (z) zu erzeugen, und
   wobei der Geber (30) ausgebildet ist entlang der Bahn die (wegabhängige) zweite Magnetfeldänderung mit der zweiten Periodizität ($T_2$) in der Magnetfeldsensoranordnung (10) in der dritten Raumrichtung (y) zu erzeugen.

8. Messsystem nach einem der vorhergehenden Ansprüche, **dadurch gekennzeichnet, dass**
   die Auswertungsschaltung (20) eingerichtet ist, zur Erzeugung des ersten Signals (D) mit der ersten Periodizität ($T_1$) aus dem ersten Messsignal (A) und dem zweiten Messsignal (B) entsprechend einer ersten Funktion, insbesondere einer Arcustangens-Funktion (arctan (A/B)).

9. Messsystem nach einem der vorhergehenden Ansprüche,
   **dadurch gekennzeichnet, dass**
   die Auswertungsschaltung (20) eingerichtet ist, ein zweites Signal (E) mit der zweiten Periodizität ($T_2$) aus dem dritten Messsignal (C) des dritten Magnetfeldsensors (13) entsprechend einer zweiten Funktion zu erzeugen.


**Claims**

1. Measuring system comprising

   - a magnetic field sensor arrangement (10) comprising a first magnetic field sensor (11), which is integrated in a semiconductor chip, for measuring a first component ($B_x$) of a magnetic field vector ($\underline{B}$) in a first dimensional direction (x),
   - a transmitter (30) which is configured to change, in dependence on its rotational and/or translational movement, the magnetic field vector ($\underline{B}$) in the first dimensional direction (x), the second dimensional direction (z) and the third dimensional direction (y),
   - wherein the movable transmitter comprises a plurality of first magnets and
   - wherein the plurality of first magnets with a movement or rotation of the transmitter (30) generates by means of a plurality of pole pairs the travel-dependent or rotational-angle-dependent change of the magnetic field vector ($\underline{B}$) at a first periodicity (T1) in the first magnetic field sensor (11) in the first dimensional direction (x), and
   - an evaluating circuit (20) with which the first magnetic field sensor (11) is connected,

   **characterised in that**

   - the movable transmitter (30) comprises a plurality of second magnets,
   - the measuring system comprises a second magnetic field sensor (12), which is integrated in the semiconductor chip, for measuring a second component ($B_z$) of the magnetic field vector ($\underline{B}$) in a second dimensional direction (z) and a third magnetic field sensor (13), which is integrated in the semiconductor chip, for measuring a third component ($B_y$) of the magnetic field vector ($\underline{B}$) in a third dimensional direction (y),
   - wherein plurality of second magnets with the movement or rotation of the transmitter (30) generates the travel-dependent or rotational-angle-dependent change of the magnetic field vector ($\underline{B}$) at a second periodicity (T2) in the second magnetic field sensor (12) in the third dimensional direction (y),

- wherein the plurality of first magnets with a movement or rotation of the transmitter (30) generates by means of a plurality of pole pairs the travel-dependent or rotational-angle-dependent change of the magnetic field vector (B) at the first periodicity (T1 in the third magnetic field sensor (13) in the second dimensional direction (z),
- wherein a first period of the first periodicity (T1) and a second period of the second periodicity (T2) are different,
- wherein the second magnetic field sensor (12) and the third magnetic field sensor (13) are connected with the evaluating circuit (20) and
- the evaluating circuit (20) is arranged to determine the position of the transmitter (30) based on a first measurement signal (A) of the first magnetic field sensor (11), a second measurement signal (B) of the second magnetic field sensor (12) and a third measurement signal (C) of the third magnetic field sensor (13).

2. Measuring system according to claim 1, **characterised in that** for generating the magnetic field vector (B) the transmitter (30) comprises a plurality of magnets (31, 32, 32a, 32b) and/or a plurality of coils.

3. Measuring system according to one of the preceding claims, **characterised in that** for generating the magnetic field (B) the magnetic field sensor arrangement (10) comprises a plurality of magnets (19) and/or a plurality of coils.

4. Measuring system according to claim 2, **characterised in that** the rotationally movable transmitter (30) comprises a plurality of first magnets (31) and a plurality of second magnets, wherein the plurality of first magnets with each revolution of the transmitter (30) generates by means of a plurality of pole pairs the rotational-angle-dependent first magnetic field change at the first periodicity (T1) in the magnetic field sensor arrangement (10) in the first dimensional direction (x) and second dimensional direction (z) and wherein the plurality of second magnets with each revolution of the transmitter (30) generates the rotational-angle-dependent second magnetic field change at the second periodicity (T2) in the magnetic field sensor arrangement (10) in the third dimensional direction (y).

5. Measuring system according to claim 2, **characterised in that** the transmitter (30) movable along a track relative to the magnetic field sensor arrangement (10) comprises a plurality of first magnets (31) and a plurality of second magnets (32, 32a, 32b), wherein the plurality of first magnets (31) with a movement of the transmitter (31) along the track generates by means of a plurality of pole pairs the travel-dependent first magnetic field change at the first periodicity (T1) in the magnetic field sensor arrangement (10) in the first dimensional direction (x) and in the second dimensional direction (z) and wherein the plurality of second magnets (32, 32a, 32b) with the movement of the transmitter (30) along the track generates the travel-dependent second magnetic field change at the second periodicity (T2) in the magnetic field sensor arrangement (10) in the third dimensional direction (y).

6. Measuring system according to claim 3, **characterised in that** the rotationally movable transmitter comprises a plurality of teeth, wherein a material of the teeth influences a magnetic field of a magnet of the magnetic field sensor arrangement, wherein the teeth of the transmitter are configured to generate with each revolution of the transmitter the rotational-angle-dependent first magnetic field change of the magnetic field vector in the magnetic field sensor arrangement at the first periodicity in the first dimensional direction and second dimensional direction and wherein the transmitter is configured to generate by each revolution the (rotational-angle-dependent) second magnetic field change at the second periodicity in the magnetic field sensor arrangement in the third dimensional direction.

7. Measuring system according to claim 3, **characterised in that** the transmitter (30) movable along a track relative to the magnetic field sensor arrangement (10) comprises a plurality of teeth (33), wherein a material of the teeth (33) influences a magnetic field of a magnet (19) of the magnetic field sensor arrangement (10), wherein the teeth (33) of the transmitter (30) are configured to generate, when movement of the transmitter (30) along the track takes place, the travel-dependent first magnetic field change at the first periodicity (T1) in the magnetic field sensor arrangement (10) in the first dimensional direction (x) and the second dimensional direction (z) and wherein the transmitter (30) is configured to generate along the track the (travel-dependent) second magnetic field change at the second periodicity (T2) in the magnetic field sensor arrangement (10) in the third dimensional direction (y).

8. Measuring system according to any one of the preceding claims, **characterised in that** the evaluating circuit (20) is arranged to generate the first signal (D) at the first periodicity (T1) from the first measurement signal (A) and the second measurement signal (B) in correspondence with a first function, particularly an arcus-tangent function (arctan (A/B)).

9. Measuring system according to any one of the preceding claims, **characterised in that** the evaluating circuit (20) is arranged to generate a second signal (E) at the second periodicity (T2) from the third measurement signal (C) of the third magnetic field sensor (13) in correspondence with a second function.

**Revendications**

1. Système de mesure,

- avec un agencement de détecteurs de champ magnétique (10) qui présente un premier détecteur de champ magnétique (11) intégré dans une puce à semi-conducteur pour la mesure d'une première composante ($B_x$) d'un vecteur champ magnétique ($\underline{B}$) dans une première direction de l'espace (x) et
- avec un émetteur (30) qui est conçu pour modifier, en fonction de son mouvement de rotation et/ou de translation, le vecteur champ magnétique ($\underline{B}$) dans la première direction de l'espace (x) et dans la deuxième direction de l'espace (z) et dans la troisième direction de l'espace (y),
- dans lequel l'émetteur mobile présente une multiplicité de premiers aimants,
- dans lequel la multiplicité de premiers aimants produit, avec un mouvement ou une rotation de l'émetteur (30), au moyen d'une multiplicité de paires de pôles, la modification du vecteur champ magnétique ($\underline{B}$) en fonction de la course ou en fonction de l'angle de rotation, avec une première périodicité (T1) dans le premier détecteur de champ magnétique (11) dans la première direction de l'espace (x),
- avec un circuit d'exploitation (20), auquel le premier détecteur de champ magnétique (11) est relié,

**caractérisé en ce que**

- l'émetteur mobile (30) présente un nombre de deuxièmes aimants,
- le système de mesure présente un deuxième détecteur de champ magnétique (12) intégré dans la puce à semi-conducteur pour la mesure d'une deuxième composante ($B_z$) du vecteur champ magnétique ($\underline{B}$) dans une deuxième direction de l'espace (z) et un troisième détecteur de champ magnétique (13) intégré dans la puce à semi-conducteur pour la mesure d'une troisième composante ($B_y$) du vecteur champ magnétique ($\underline{B}$) dans une troisième direction de l'espace (y),
- dans lequel le nombre de deuxièmes aimants produit, avec le déplacement ou la rotation de l'émetteur (30), la modification du vecteur champ magnétique ($\underline{B}$), en fonction de la course ou en fonction de l'angle de rotation, avec une deuxième périodicité (T2) dans le deuxième détecteur de champ magnétique (12) dans la troisième direction de l'espace (y),
- dans lequel le nombre de premiers aimants produit, avec un mouvement ou une rotation de l'émetteur (30), au moyen d'une multiplicité de paires de pôles, la modification du vecteur champ magnétique ($\underline{B}$), en fonction de la course ou en fonction de l'angle de rotation, avec la première périodicité (T1) dans le troisième détecteur de champ magnétique (13) dans la deuxième direction de l'espace (z),
- dans lequel une première période de la première périodicité (T1) et une deuxième période de la deuxième périodicité (T2) sont différentes,
- dans lequel le deuxième détecteur de champ magnétique (12) et le troisième détecteur de champ magnétique (13) sont reliés au circuit d'exploitation (20) et
- le circuit d'exploitation (20) est conçu pour déterminer la position de l'émetteur (30) en se basant sur un premier signal de mesure (A) du premier détecteur de champ magnétique (11) et un deuxième signal de mesure (B) du deuxième détecteur de champ magnétique (12) et un troisième signal de mesure (C) du troisième détecteur de champ magnétique (13).

2. Système de mesure selon la revendication 1, **caractérisé en ce que**, pour produire le vecteur champ magnétique ($\underline{B}$), l'émetteur (30) présente un nombre d'aimants (31, 32, 32a, 32b) et/ou un nombre de bobines.

3. Système de mesure selon l'une quelconque des revendications précédentes, **caractérisé en ce que**, pour produire le vecteur champ magnétique ($\underline{B}$), l'agencement de détecteurs de champ magnétique (10) présente un nombre d'aimants (19) et/ou un nombre de bobines.

4. Système de mesure selon la revendication 2, **caractérisé en ce que** l'émetteur mobile en rotation (30) présente une multiplicité de premiers aimants (31) et un nombre de deuxièmes aimants, dans lequel la multiplicité de premiers aimants produit, avec chaque révolution de l'émetteur (30), au moyen d'une multiplicité de paires de pôles, la première modification de champ magnétique en fonction de l'angle de rotation, avec la première périodicité ($T_1$) dans l'agencement de détecteurs de champ magnétique (10) dans la première direction de l'espace (x) et dans la deuxième direction de l'espace (z) et dans lequel le nombre de deuxièmes aimants produit, avec chaque révolution de l'émetteur (30), la deuxième modification de champ magnétique en fonction de l'angle de rotation avec la deuxième périodicité ($T_2$) dans l'agencement de détecteurs de champ magnétique (10) dans la troisième direction de l'espace (y).

**5.** Système de mesure selon la revendication 2, **caractérisé en ce que** l'émetteur (30) mobile le long d'une voie par rapport à l'agencement de détecteurs de champ magnétique (10) présente une multiplicité de premiers aimants (31) et un nombre de deuxièmes aimants (32, 32a, 32b), dans lequel la multiplicité de premiers aimants (31) produit, avec un mouvement de l'émetteur (31) le long de la voie, au moyen d'une multiplicité de paires de pôles, la première modification de champ magnétique en fonction de la course, avec la première périodicité ($T_1$) dans l'agencement de détecteurs de champ magnétique (10) dans la première direction de l'espace (x) et dans la deuxième direction de l'espace (z), dans lequel le nombre de deuxièmes aimants (32, 32a, 32b) produit, avec le mouvement de l'émetteur (30) le long de la voie, la deuxième modification de champ magnétique en fonction de la course, avec la deuxième périodicité ($T_2$) dans l'agencement de détecteurs de champ magnétique (10) dans la troisième direction de l'espace (y).

**6.** Système de mesure selon la revendication 3, **caractérisé en ce que** l'émetteur mobile en rotation présente une multiplicité de dents, dans lequel un matériau des dents influence un champ magnétique d'un aimant de l'agencement de détecteurs de champ magnétique, dans lequel les dents de l'émetteur sont réalisées de façon à produire, avec chaque révolution de l'émetteur, la première modification de champ magnétique en fonction de l'angle de rotation du vecteur champ magnétique dans l'agencement de détecteurs de champ magnétique avec la première périodicité dans la première direction de l'espace et dans la deuxième direction de l'espace, et dans lequel l'émetteur est configuré pour produire, avec chaque révolution, la deuxième modification de champ magnétique (en fonction de l'angle de rotation) avec la deuxième périodicité dans l'agencement de détecteurs de champ magnétique dans la troisième direction de l'espace.

**7.** Système de mesure selon la revendication 3, **caractérisé en ce que** l'émetteur (30) mobile le long d'une voie par rapport à l'agencement de détecteurs de champ magnétique (10) présente une multiplicité de dents (33), dans lequel un matériau des dents (33) influence un champ magnétique d'un aimant (19) de l'agencement de détecteurs de champ magnétique (10), dans lequel les dents (33) de l'émetteur (30) sont configurées pour produire, lors d'un mouvement de l'émetteur (30) le long de la voie, la première modification de champ magnétique en fonction de la course avec la première périodicité ($T_1$) dans l'agencement de détecteurs de champ magnétique (10) dans la première direction de l'espace (x) et dans la deuxième direction de l'espace (z), et dans lequel l'émetteur (30) est configuré pour produire le long de la voie la deuxième modification de champ magnétique (en fonction de la course) avec la deuxième périodicité ($T_2$) dans l'agencement de détecteurs de champ magnétique (10) dans la troisième direction de l'espace (y).

**8.** Système de mesure selon l'une quelconque des revendications précédentes, **caractérisé en ce que** le circuit d'exploitation (20) est conçu pour produire le premier signal (D) avec la première périodicité ($T_1$) à partir du premier signal de mesure (A) et du deuxième signal de mesure (B) selon une première fonction, en particulier une fonction arctangente (arctan (A/B)).

**9.** Système de mesure selon l'une quelconque des revendications précédentes, **caractérisé en ce que** le circuit d'exploitation (20) est conçu pour produire un deuxième signal (E) avec la deuxième périodicité ($T_2$) à partir du troisième signal de mesure (C) du troisième détecteur de champ magnétique (13) suivant une deuxième fonction.

Fig. 1

Fig. 2

Fig. 3

Fig. 4

Fig. 5

Fig. 6

Fig. 7

Fig. 8a

Fig. 8b

Fig. 8c

Fig. 9a

Fig. 9b

Fig. 9c

Fig. 10a

Fig. 10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2354769 A1
- US 2008044119 A1
- JP 2003194901 A
- US 2012262157 A1
- EP 2339299 A2
- WO 2012060216 A1
- DE 102008059401 A1
- EP 1111392 A1
- EP 1503182 B1

**In der Beschreibung aufgeführte Nicht-Patentliteratur**

- **J. QUASDORF.** *ELEKTRONIK PRAXIS,* 17. September 2008, 22